Europäisches Patentamt

European Patent Office

Office européen des brevets

(11) Veröffentlichungsnummer : **0 168 376**
**B1**

(12) EUROPÄISCHE PATENTSCHRIFT

(45) Veröffentlichungstag der Patentschrift :
27.07.88

(21) Anmeldenummer : 85890122.6

(22) Anmeldetag : 30.05.85

(51) Int. Cl.⁴ : **B 60 K 17/24**, B 60 F 3/00

(54) Abdichtung für eine in der Bodenwanne eines Kraftfahrzeuges angeordnete Durchtrittsöffnung.

(30) Priorität : 09.07.84 AT 2199/84

(43) Veröffentlichungstag der Anmeldung :
15.01.86 Patentblatt 86/03

(45) Bekanntmachung des Hinweises auf die Patenterteilung : 27.07.88 Patentblatt 88/30

(84) Benannte Vertragsstaaten :
BE CH DE FR GB LI

(56) Entgegenhaltungen :
DE-A- 2 105 722
DE-B- 1 211 506

(73) Patentinhaber : Steyr-Daimler-Puch Aktiengesellschaft
Postfach 62 Franz-Josefs-Kai 51
A-1011 Wien (AT)

(72) Erfinder : Lenhard-Backhaus, Hugo, Dipl.-Ing.
Herzog Ernst Gasse 11
A-8600 Bruck/Mur (AT)
Erfinder : Kauer, Erhard, Ing.
Am Schanzgraben 2
A-7081 Schützen/Gebirge (AT)
Erfinder : Hörmann, Gerhard
Simmeringer Hauptstrasse 142/14/4
A-1110 Wien (AT)

EP 0 168 376 B1

Jouve, 18, rue St-Denis, 75001 Paris, France

## Beschreibung

Die Erfindung betrifft eine Abdichtung für eine in der Bodenwanne eines Kraftfahrzeuges angeordnete Durchtrittsöffnung, durch die eine Antriebswelle von einem in der Bodenwanne elastisch gelagerten Getriebe nach außen führt, mit einem die Durchtrittsöffnung mit Radialspiel durchsetzenden im wesentlichen zylindrischen Zwischenstück, wobei zwischen diesem Zwischenstück und dem Getriebegehäuse einerseits und dem Zwischenstück und der Bodenwanne anderseits je eine ringförmige Dichtung angeordnet ist.

Kraftfahrzeuge mit einer Bodenwanne sollen in der Regel schwimmfähig oder zumindest watfähig sein. Dabei ist es dann notwendig, möglichst viele Teile der Antriebseinrichtung innerhalb der Bodenwanne vorzusehen, um sie vor Nässe und auch Beschädigung zu bewahren. Liegen also das Ausgleichgetriebe und gegebenenfalls das mit diesem verbundene Verteilergetriebe od. dgl. innerhalb der Bodenwanne, so muß dafür gesorgt werden, die Durchtrittsöffnung in den Seitenwänden der Bodenwanne für die Radantriebswellen so abzudichten, daß eine ausreichende Möglichkeit zur Relativbewegung der in der Bodenwanne elastisch gelagerten Getriebe der Wanne gegenüber gewährleistet ist. Außerdem müssen aber die Abdichtungen leicht montierbar bzw. abnehmbar sein und dürfen den Ausbau der Getriebe aus der Wanne nach oben nicht behindern.

Es ist bereits eine Abdichtung der eingangs geschilderten Art bekannt (DE-B-1 211 506), bei der die beiden ringförmigen Dichtungen als Rollbalgmembranen ausgebildet sind. Solche Rollbalgmembranen weisen aber nicht die erforderliche Dauerfestigkeit auf, wenn sie, um genügend nachgiebig zu sein, entsprechend dünn ausgeführt werden. Außerdem sind sie durch von außen zur Durchtrittsöffnung der Bodenwanne vordringende harte Fremdkörper leicht beschädigbar und bereiten Montageschwierigkeiten.

Somit liegt der Erfindung die Aufgabe zugrunde, diese Mängel zu beseitigen und eine Abdichtung zu schaffen, die bei leichter Montage eine lange Standzeit gewährleistet und auch vor vordringenden Fremdkörpern Schutz bietet.

Die Erfindung löst die gestellte Aufgabe dadurch, daß das Zwischenstück an der dem Getriebegehäuse zugekehrten Seite einen radial einwärts gerichteten Ringbord aufweist, an dem ein die erste Dichtung bildender Gummiring anvulkanisiert ist, der seinerseits an einer am Getriebegehäuse befestigbaren Scheibe anvulkanisiert ist, und daß das Zwischenstück an der Außenfläche seines Mantels über einen die zweite Dichtung bildenden und ebenfalls beidseitig anvulkanisierten Gummiring einen Flanschring trägt, der an der Seitenwand der Bodenwanne anschraubbar ist.

Das Zwischenstück trägt also zwei Gummiringe, die aber durch den Ringbord bzw. den Mantel des Zwischenstückes nach außen abgeschirmt und daher vor Beschädigungen geschützt sind. Diese Gummiringe können ein vergleichsweise großes Volumen aufweisen, um einerseits die erforderliche Nachgiebigkeit und anderseits die gewünschte Langlebigkeit zu erreichen. Die Montage ist sehr einfach, da lediglich der Flanschring an der Seitenwand der Bodenwanne und die Scheibe am Gehäuse des Getriebes angeschraubt zu werden brauchen. Selbstverständlich darf der Abstand des Getriebegehäuses von der die Durchtrittsöffnung aufweisenden Seitenwand der Bodenwanne nicht zu groß sein, was aber auch erwünscht ist, um die Antriebswelle innerhalb eines von der Bodenwanne gebildeten Tunnels mit ausreichender Schwenkmöglichkeit für die Raddurchfederung führen zu können. Da die Gummiringe mit dem Zwischenstück einerseits und der Scheibe bzw. dem Flanschring anderseits zusammenvulkanisiert sind, ist zwischen diesen Teilen nicht nur die feste Verbindung, sondern auch die gewünschte Dichtheit erzielt.

Um eine besondere Bearbeitung der Außenseite des Getriebegehäuses und der Seitenwand der Bodenwanne zu erübrigen und dennoch einen völlig dichten Anschluß der Scheibe einerseits und des Flanschringes anderseits am Getriebegehäuse und an der Bodenwannenseitenwand zu erzielen, ist zwischen der Scheibe und dem Getriebegehäuse sowie zwischen dem Flanschring und der Seitenwand der Bodenwanne je ein zusätzlicher Dichtring eingesetzt.

Ferner ist erfindungsgemäß der vom Getriebegehäuse abgekehrte Rand des Zwischenstückes zur Abdeckung der freien Stirnfläche des die zweite Dichtung bildenden Gummiringes nach außen gebördelt, so daß auch diese sonst freie Fläche des Gummiringes gegen Beschädigungen geschützt ist.

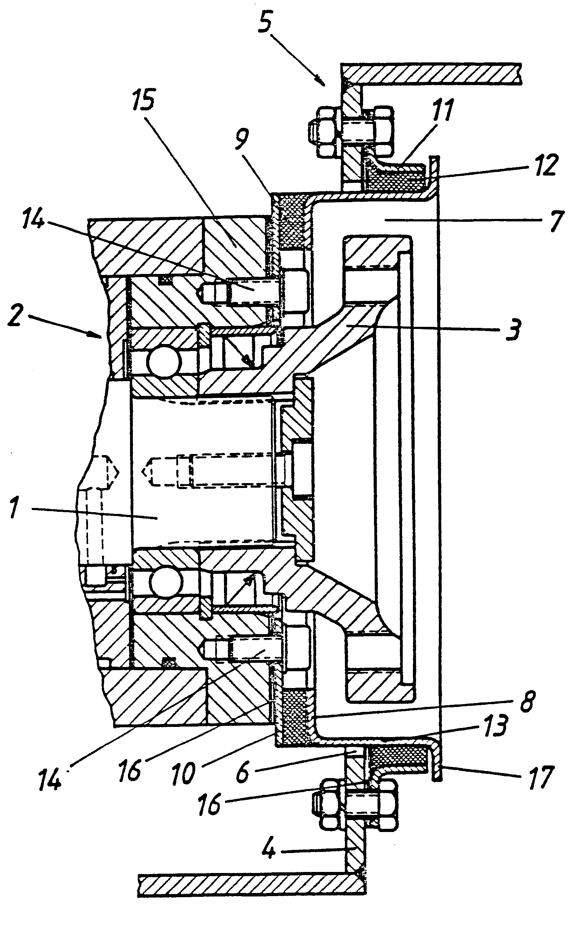

Die Zeichnung zeigt als Ausführungsbeispiel einen Teil der Seitenwand der Bodenwanne eines Kraftfahrzeuges mit dem anschließenden Ausgleichgetriebe und der erfindungsgemäßen Abdichtung im Vertikalschnitt.

Auf der Abtriebswelle 1 des nicht näher dargestellten Ausgleichgetriebes 2 ist drehfest ein Flansch 3 befestigt, an den das Kreuzgelenk der Radantriebswelle anschließbar ist. Die Seitenwand 4 der allgemein mit 5 bezeichneten Bodenwanne des Kraftfahrzeuges weist eine Durchtrittsöffnung 6 für die Radantriebswelle bzw. den Flansch 3 auf.

Für diese Durchtrittsöffnung 6 ist eine Abdichtung vorgesehen, die ein sie mit Radialspiel durchsetzendes Zwischenstück 7 aufweist. Das Zwischenstück 7 besitzt an der dem Getriebegehäuse 15 zugekehrten Seite einen radial einwärts gerichteten Ringbord 8, an dem ein Gummiring 9 anvulkanisiert ist, der seinerseits an einer am Getriebegehäuse 15 befestigbaren Scheibe 10 anhaftet. Ein an der Seitenwand 4 der Bodenwanne 5 angeschraubter Flanschring 11 ist an einen zweiten Gummiring 12 anvulkanisiert, der wieder mit der Außenfläche des Mantels 13 des Zwischenstückes 7 haftend verbunden ist. Die Scheibe 10 ist mit Hilfe von Schrauben 14 am Getriebegehäuse 15 befestigt. Sowohl zwischen der Scheibe 10 und dem Getriebegehäuse 15 als auch zwischen dem Flanschring 11 und der Seitenwand 4 ist je ein Dichtring 16 eingesetzt. Der vom Getriebegehäuse 15 abgekehrte Rand 17 des Zwischenstückes 7 ist zur Abdeckung der freien Stirnfläche des Gummiringes 12 nach außen gebördelt.

**Patentansprüche**

1. Abdichtung für eine in der Bodenwanne (5) eines Kraftfahrzeuges angeordnete Durchtrittsöffnung (6), durch die eine Antriebswelle von einem in der Bodenwanne (5) elastisch gelagerten Getriebe (2) nach außen führt, mit einem die Durchtrittsöffnung (6) mit Radialspiel durchsetzenden, im wesentlichen zylindrischen Zwischenstück (7), wobei zwischen diesem Zwischenstück (7) und dem Getriebegehäuse (15) einerseits und dem Zwischenstück (7) und der Bodenwanne (5) anderseits je eine ringförmige Dichtung (10, 12) angeordnet ist, dadurch gekennzeichnet, daß das Zwischenstück (7) an der dem Getriebegehäuse (15) zugekehrten Seite einen radial einwärtsgerichteten Ringbord (8) aufweist, an dem ein die erste Dichtung bildender Gummiring (9) anvulkanisiert ist, der seinerseits an einer am Getriebegehäuse (15) befestigbaren Scheibe (10) anvulkanisiert ist, und daß das Zwischenstück (7) an der Außenfläche seines Mantels (13) über einen die zweite Dichtung bildenden und ebenfalls beidseitig anvulkanisierten Gummiring (12) einen Flanschring (11) trägt, der an der Seitenwand (4) der Bodenwanne (5) anschraubbar ist.

2. Abdichtung nach Anspruch 1, dadurch gekennzeichnet, daß zwischen der Scheibe (10) und dem Getriebegehäuse (15) sowie zwischen dem Flanschring (11) und der Seitenwand (4) der Bodenwanne (5) je ein zusätzlicher Dichtring (16) eingesetzt ist.

3. Abdichtung nach Anspruch 1, dadurch gekennzeichnet, daß der vom Getriebegehäuse (15) abgekehrte Rand (17) des Zwischenstückes (7) zur Abdeckung der freien Stirnfläche des die zweite Dichtung bildenden Gummiringes (12) nach außen gebördelt ist.

**Claims**

1. Sealing means for a passage opening (6), which is provided in the floor pan (5) of a motor vehicle and through which a drive shaft extends outwardly from a transmission (2), which is elastically mounted in the floor pan (5), comprising a substantially cylindrical adapter (7), which extends through the passage opening (6) with a radial play, wherein respective annular seals (10, 12) are provided between that adapter (7) and the transmission housing (15) and between the adapter (7) and the floor pan (5), characterized in that the adapter (7) comprises a radially inwardly directed annular flange (8) on that side which faces the transmission housing (15), a rubber ring (9) which constitutes the first seal is vulcanization-bonded to that ring flange and is vulcanization-bonded to a disc (10), which is adapted to be secured to the transmission housing (15), a flange ring (11) is carried on the outside surface of the shell (13) of the adapter (7) by means of a rubber ring (12), which constitutes the second seal and is also vulcanization-bonded on both sides, and the flange ring (11) is adapted to be screw-connected to the side wall (4) of the floor pan (5).

2. Sealing means according to claim 1, characterized in that respective additional sealing rings (16) are inserted between the disc (10) and the transmission housing (15) and between the flange ring (11) and the side wall (4) of the floor pan (5).

3. Sealing means according to Claim 1, characterized in that the edge portion (17) of the adapter (7) which faces away from the transmission housing (15) is flanged outwardly to cover the free end face of the rubber ring (12) which constitutes the second seal.

**Revendications**

1. Dispositif d'étanchéité pour une ouverture de passage (6) prévue dans la cuvette de fond (5), sur un véhicule à moteur, par laquelle passe vers l'extérieur un arbre de transmission d'une boîte de vitesses (2) montée élastiquement dans la cuvette de fond (5) avec une pièce intermédiaire (7) essentiellement cylindrique s'introduisant avec un jeu radial à travers l'ouverture de passage (6) dans lequel entre cette pièce intermédiaire (7) et le carter de la boîte de vitesses (15) d'une part et entre la pièce intermédiaire (7) et la cuvette de fond (5) d'autre part est disposée à chaque fois une pièce d'étanchéité annulaire, caractérisé en ce que la pièce intermédiaire (7) présente du côté tourné vers le carter de la boîte de vitesses (15) un bord annulaire (8) dirigé vers l'intérieur en sens radial auquel est fixé par vulcanisation un anneau en caoutchouc (9) formant la première pièce d'étanchéité qui est elle-même fixée de son côté par vulcanisation à un disque (10) pouvant être fixé au carter de la boîte de vitesses (15), et que la pièce intermédiaire (7) porte sur la face extérieure de son corps (13), un anneau en caoutchouc (12) constituant la deuxième pièce d'étanchéité et, également fixée par vulcanisation sur deux côtés, une bride (11) qui peut être fixée par vissage à la paroi latérale (4) de la cuvette de fond (5).

2. Dispositif d'étanchéité selon la revendication 1, caractérisé en ce qu'il est introduit entre le disque (10) et le carter de la boîte de vitesses (15) ainsi qu'entre la bride (11) et la paroi latérale (4) de la cuvette de fond (5) à chaque fois un anneau d'étanchéité supplémentaire (16).

3. Dispositif d'étanchéité le bord (17) de l'élément intermédiaire (7) situé à l'opposé du

carter de la boîte de vitesses (15) est plié vers l'extérieur pour couvrir la tranche extrême libre de l'anneau en caoutchouc (12) constituant la deuxième pièce d'étanchéité.

0 168 376